Europäisches Patentamt

European Patent Office

Office européen des brevets

(19)

(11) Numéro de publication : **0 052 058**
**B1**

(12)

# FASCICULE DE BREVET EUROPÉEN

(45) Date de publication du fascicule du brevet :
01.10.86

(21) Numéro de dépôt : **81401780.2**

(22) Date de dépôt : **10.11.81**

(51) Int. Cl.⁴ : **G 01 N 27/90// B21D3/04**

(54) **Dispositif de détection par courants de Foucault de défauts dans un produit métallique.**

(30) Priorité : **12.11.80 FR 8024016**
**25.02.81 FR 8103726**

(43) Date de publication de la demande :
**19.05.82 Bulletin 82/20**

(45) Mention de la délivrance du brevet :
**01.10.86 Bulletin 86/40**

(84) Etats contractants désignés :
**DE GB IT SE**

(56) Documents cités :
**FR-A- 1 308 785**
**FR-A- 2 015 382**
**FR-A- 2 218 146**
**FR-A- 2 449 283**
**GB-A- 1 200 146**
**US-A- 3 535 625**
**US-A- 3 916 301**
**US-A- 4 191 922**

(73) Titulaire : **INTERCONTROLE Société dite:**
**15, rue des Solets Bt L 15 Zone Silic 433**
**F-94583 Rungis Cedex (FR)**

(72) Inventeur : **Sagnier, Jean-Robert**
**13, avenue du Général Leclerc**
**F-55800 Revigny Sur Ornain (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue St-Denis, 75001 Paris, France

## Description

La présente invention est relative au contrôle non destructif de produits métalliques par courants de Foucault au moyen d'une sonde ponctuelle devant laquelle défile le produit. Elle s'applique en particulier au contrôle de barres rondes à l'intérieur d'une dresseuse faisant partie d'une chaîne d'étirage et conférant à ces barres un mouvement hélicoïdal de défilement.

Le brevet US. 3 535 625 décrit un dispositif de détection de défauts dans un produit métallique défilant devant une sonde comprenant deux enroulements en série disposés à des distances différentes du produit, un enroulement inducteur disposé de façon à engendrer dans les deux enroulements des champs magnétiques opposés, des moyens de captage de la tension aux bornes de ces deux enroulements et un circuit électronique de détection de la variation de l'argument du vecteur représentatif de cette tension par rapport au vecteur tension inductrice.

Il a également été proposé (brevet FR. 2 218 146) d'intégrer une sonde comportant deux enroulements en série dans une dresseuse, à l'emplacement où les vibrations de la barre sont minimales et où la vitesse de défilement est constante. La sonde est appliquée élastiquement sur la barre et rétractée lors de l'entrée et de la sortie de celle-ci.

Cette solution présente de graves inconvénients :

— lorsque des produits à contrôler se déplacent, notamment dans le cas des dresseuses, ils soumettent leurs organes de guidage à des chocs importants lors de leur entrée et de leur sortie. Ces chocs peuvent endommager le dispositif de mise en appui de la sonde ;

— en cours de contrôle, la sonde peut être endommagée par de gros défauts de la barre ;

— un dérèglement ou une avarie du système de commande de mise en contact des sondes peut entraîner leur destruction immédiate ;

— la présence et l'accumulation de boues, résultant du mélange des liquides de lubrification avec les particules métalliques « décollées » du produit par les contraintes de dressage, sont de nature à empêcher très rapidement le fonctionnement des mécanismes de commande des sondes ;

— le principe d'effacer les sondes à l'entrée et à la sortie élimine le contrôle d'une zone importante aux extrémités de la barre.

Il serait souhaitable de pouvoir utiliser une sonde qui ne soit pas en contact avec le produit : on pourrait alors inspecter la quasi-totalité de la barre sans qu'aucun dispositif de déplacement de la sonde soit nécessaire et sans risque d'endommager cette sonde.

Cependant, on ne peut pas se contenter d'éloigner du produit la sonde du brevet français précité. En effet, dans ce cas, les variations de distance entre le produit et la sonde suivant les conditions de réglage de la dresseuse, lesquelles sont fonction des caractéristiques mécaniques désirées, les différences d'élévation de température et d'état de contraintes du produit suivant ce réglage, ainsi que les petites vibrations inévitables du produit, rendent difficile l'obtention d'une sensibilité de détection constante, d'autant plus que l'intervalle entre la sonde et le produit a pour conséquence un mauvais couplage électromagnétique.

L'invention a donc pour but de fournir un dispositif de détection permettant d'utiliser industriellement une sonde maintenue hors de contact avec le produit à contrôler, sans risque d'endommager cette sonde.

A cet effet, l'invention a pour objet un dispositif de détection par courants de Foucault de défauts dans un produit métallique défilant devant au moins une sonde, ce dispositif étant destiné à être intégré dans une dresseuse à deux galets dont l'un est un galet hyperbolique, ladite au moins une sonde comprenant deux enroulements en série disposés à des distances différentes du produit, un enroulement inducteur disposé de façon à engendrer dans les deux enroulements des champs magnétiques opposés, des moyens de captage de la tension aux bornes de ces deux enroulements et un circuit électronique de détection de la variation de l'argument du vecteur représentatif de cette tension par rapport au vecteur tension inductrice, caractérisé en ce que la sonde est noyée, dans une réglette de guidage de ladite dresseuse, cette réglette faisant face au sens de rotation du galet hyperbolique et est protégée par une pièce interchangeable.

Dans un mode de réalisation qui s'est avéré conduire à des résultats de mesure optimaux, la sonde, ou la première sonde dans le sens de défilement du produit, est disposée en aval ou dans la région du point où le produit quitte le galet hyperbolique.

L'invention est exposée ci-après plus en détail à l'aide des dessins annexés, qui en représentent seulement un mode d'exécution. Sur ces dessins :

la Figure 1 est une vue schématique d'une sonde destinée à la mise en œuvre de l'invention ;

les Figures 2 à 5 sont des diagrammes illustrant le procédé de détection de l'invention ;

la Figure 6 est un schéma d'implantation d'une sonde dans une dresseuse ;

la Figure 7 est une vue en perspective du positionnement des deux sondes pour la mise en œuvre de l'invention ;

les Figures 8A à 8C sont des courbes illustrant le traitement des informations fournies par les sondes de la Fig. 7 ;

les Figures 9A à 9C constituent ensemble un schéma du circuit électronique de traitement de signaux ;

la Figure 10 est une vue schématique en plan

2

d'un dispositif de détection suivant un mode de réalisation préféré de l'invention, intégré à une dresseuse à deux galets ;

la Figure 11 est une vue prise en coupe suivant la ligne 11-11 de la Fig. 10.

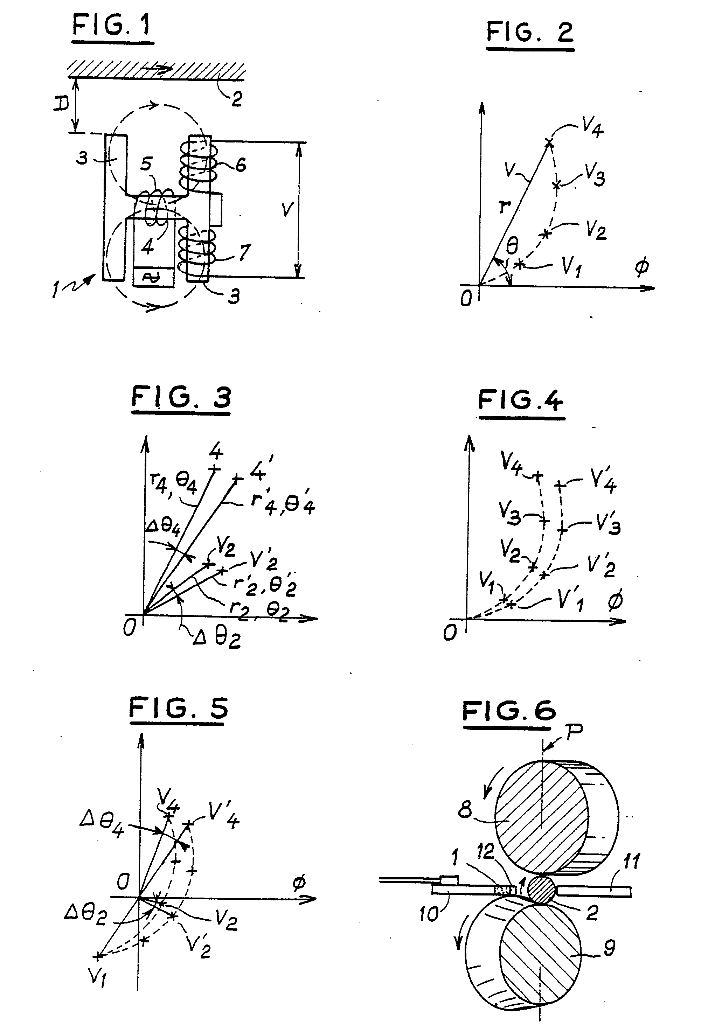

La sonde 1 de la Fig. 1 a la forme d'un H perpendiculaire au produit métallique 2 à contrôler, qui défile devant elle en mouvement relatif. Les deux branches 3 du H se terminent à la même distance du produit 2, et son âme 4 est parallèle à ce dernier.

L'âme 4 porte un enroulement inducteur 5, tandis qu'une branche 3 porte deux enroulements 6, 7 montés en série, placés symétriquement par rapport à l'enroulement 5 et enroulés dans le même sens.

L'enroulement 5 est relié à une source de tension alternative et engendre à chaque instant un champ magnétique dans les deux moitiés du H. Ce champ traverse en sens inverse les enroulements 6 et 7, comme illustré à la Fig. 1. La variation de ce champ induit dans les enroulements 6 et 7 des f.é.m. alternatives.

En l'absence du produit 2, les f.é.m. induites s'annulent, de sorte qu'aucun signal électrique n'est engendré aux bornes des deux enroulements 6 et 7.

Par contre, lorsque le produit 2 coupe les lignes de flux magnétique, il est le siège de courants de Foucault qui, à leur tour, créent un champ magnétique variable influençant essentiellement le flux magnétique le plus proche. La f.é.m. induite dans l'enroulement 6 le plus proche du produit 2 est donc modifiée, de sorte qu'un signal de tension alternative V apparaît aux bornes des deux enroulements 6 et 7.

Cette tension alternative peut être représentée par un vecteur tournant V (Fig. 2) de module r et d'argument ou déphasage $\theta$ par rapport au vecteur tension inductrice $\phi$. Les valeurs de r et de $\theta$ dépendent de la distance D du produit 2 à la sonde 1. On a représenté à la Fig. 2 le lieu des extrémités du vecteur V, l'origine O correspondant à une distance infinie et les points $V_1$ à $V_4$ à des distances D de plus en plus faibles.

Le passage d'un défaut du produit 2 proche de la surface de celui-ci provoque une modification rapide $\Delta R$, $\Delta \theta$ du vecteur V. La Demanderesse a constaté que la valeur de $\Delta \theta$ est indépendante de la distance D pour un défaut donné, c'est-à-dire que $\Delta \theta_1 = \Delta \theta_2 = \Delta \theta_3 = \Delta \theta_4$. De plus, un choix judicieux de la fréquence de la tension inductrice permet d'annuler pratiquement $\Delta r$ et donc de garantir que le déplacement du point représentatif est perpendiculaire au rayon-vecteur. La Fig. 4 montre dans cette hypothèse le lieu des points respectifs $V'_1$ à $V'_4$ au passage du défaut.

Cette constatation fournit ainsi une méthode de détection des défauts qui n'est pas affectée par les variations de distance entre la sonde et le produit : on extrait l'argument $\theta$ du signal obtenu aux bornes des enroulements 6 et 7, et on détecte les variations $\Delta \theta$. Cette méthode annule également les effets des variations de température et d'état de contraintes du produit 2 dues au réglage de la dresseuse, car ces effets ne se font sentir pratiquement que sur la valeur de $\theta$ et de r mais non sur celle de $\Delta \theta$.

Toutefois, ceci suppose une annulation parfaite du signal, c'est-à-dire un équilibrage parfait en l'absence du produit 2. En effet, comme on le voit à la Fig. 5, un déséquilibre initial, provoqué par la présence des masses métalliques avoisinantes, correspond à un décalage de l'origine pour les courbes lieux des points $V_1$ à $V_4$ et $V'_1$ à $V'_4$, ce qui conduit à une valeur non constante de $\Delta \theta$. Il est donc important d'effectuer une mesure préalable en l'absence du produit 2 et d'engendrer et d'appliquer aux bornes des enroulements 6 et 7 une tension alternative opposée à la tension obtenue.

La Fig. 6 montre l'implantation de la sonde dans une dresseuse à deux galets. La dresseuse comprend un galet cylindrique 8 et un galet hyperbolique 9 tournant dans le même sens et dont les axes horizontaux sont obliques, orientés en sens opposés et coupent le plan vertical de symétrie P de la machine dans un même plan transversal qui est le plan de la Fig. 6. La sonde 1 est située dans ce plan transversal, ou au voisinage de ce plan, en pratique dans les limites des galets 8 et 9 pour avoir une vibration acceptable du produit 2.

La machine comporte de plus deux réglettes horizontales fixes de guidage 10 et 11. En service, la réglette 10 qui fait face au sens de rotation du galet hyperbolique 9 n'est attaquée que par les extrémités du produit 2, alors que la partie courante de celui-ci ne vient en contact qu'avec la réglette 11 opposée. La sonde 1 est noyée dans la réglette 10 et est protégée par une pièce interchangeable 12.

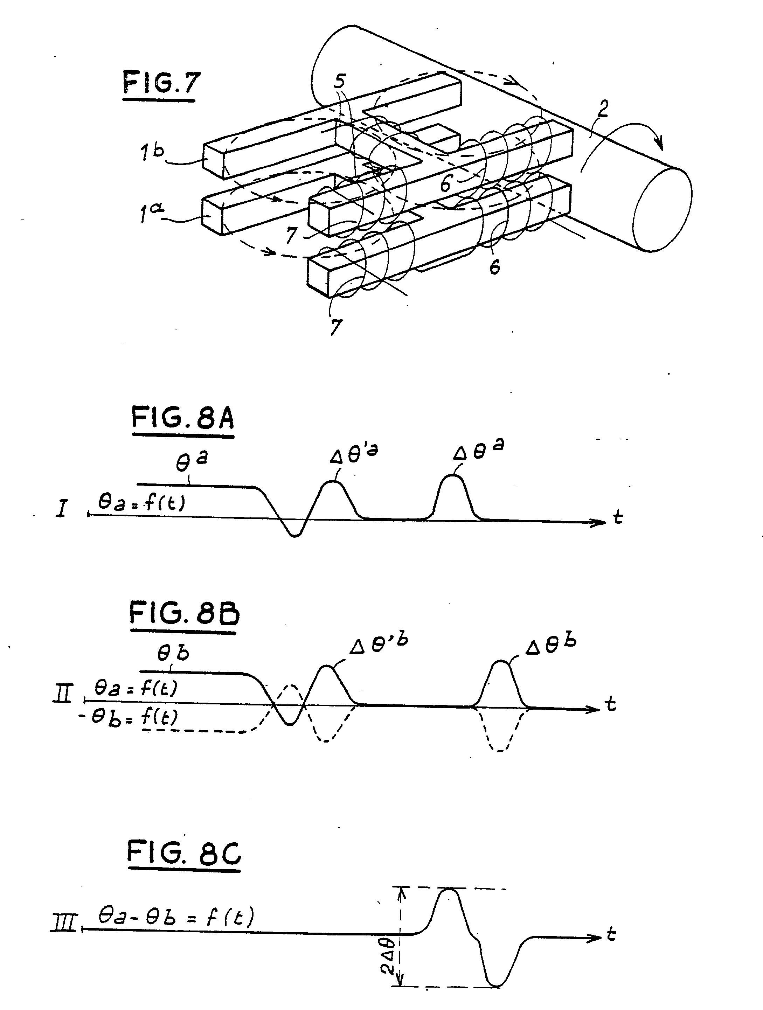

En pratique, on superpose deux sondes $1^a$ et $1^b$ symétriquement par rapport au plan horizontal de défilement horizontal du produit 2, comme représenté à la Fig. 7. Ainsi, tous les phénomènes perturbateurs qui peuvent produire des signaux de variation de l'angle $\theta$ (variations de structure du produit, vibrations, etc.) sont perçus de la même façon et simultanément par les deux sondes, tandis que les défauts du produit 2 agissent sur elles de la même façon mais avec un léger décalage dans le temps du fait du mouvement hélicoïdal précité.

On a ainsi représenté à la Fig. 8A, pour la sonde $1^a$, les variations de $\theta$ en fonction du temps t : à partir d'une valeur $\theta^a$ fonction du réglage de la dresseuse, on a indiqué l'effet d'une vibration du produit ($\Delta \theta'^a$) et du passage d'un défaut ($\Delta \theta^a$) ; la Fig. 8B est la courbe correspondante ($\theta^b$, $\Delta \theta'^b$, $\Delta \theta^b$) pour la sonde $1^b$, l'opposé de cette courbe étant représenté en pointillé, et la Fig. 8C est la courbe correspondant à la soustraction des courbes des Fig. 8A et 8B. On voit que les valeurs de $\theta^a$ et $\theta^b$ d'une part, $\Delta \theta'^a$ et $\Delta \theta'^b$ d'autre part, s'annulent, et que seul subsiste le signal intéressant correspondant au défaut recherché, dont l'amplitude crête à crête est doublée ($\Delta \theta^a + \Delta \theta^b = 2 \Delta \theta$).

En pratique, on définit un coefficient de pondération K, voisin de 0,5, choisi de façon à compenser les différences de réponse entre les circuits des deux sondes, et on calcule $\Delta \theta = K \theta^a - (1 - K) \theta^b$. De plus, notamment pour les barres de gros diamètre, il est avantageux que les deux sondes $1^a$, $1^b$ soient décalées longitudinalement de façon à augmenter la longueur de barre qu'elles couvrent. De préférence également, l'épaisseur totale de la ou des deux sondes est au plus égale au diamètre de la barre 2.

L'expérience montre que cette méthode, combinée avec un filtrage passe-haut à pente élevée de façon à ne conserver que les composantes à variation rapide des signaux, donne d'excellents résultats dans l'évaluation des défauts, même dans le cas où le couplage magnétique entre la sonde et le produit à contrôler n'est pas optimal.

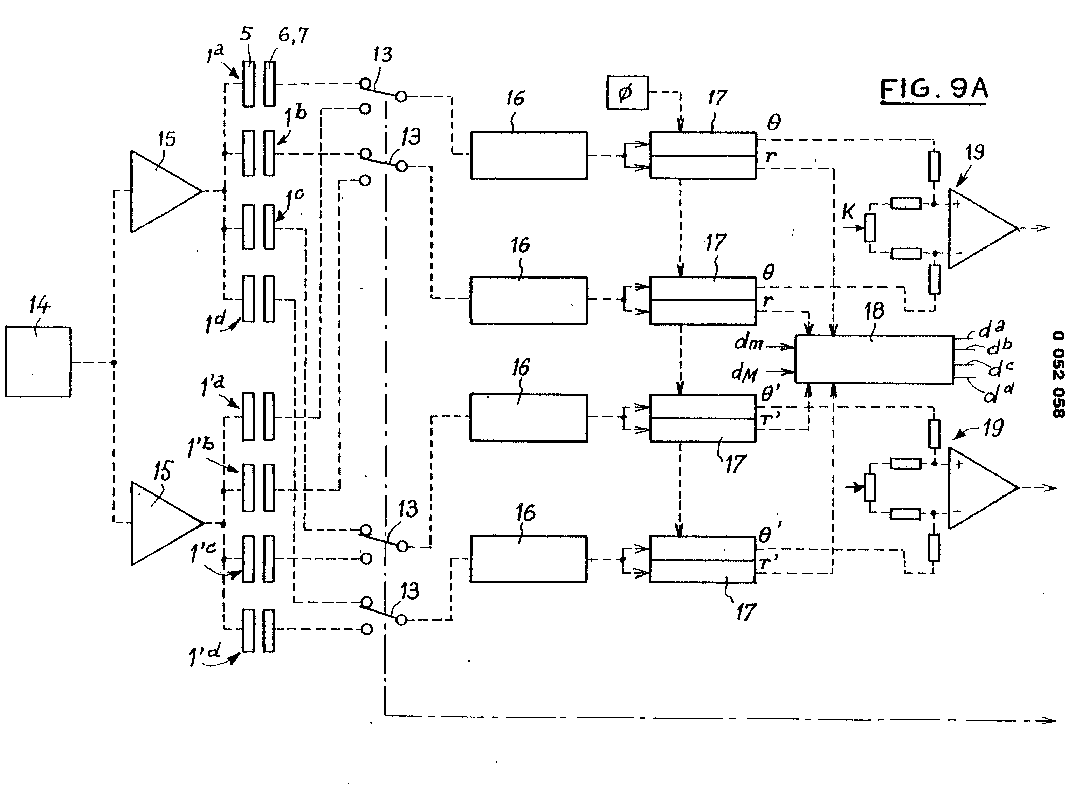

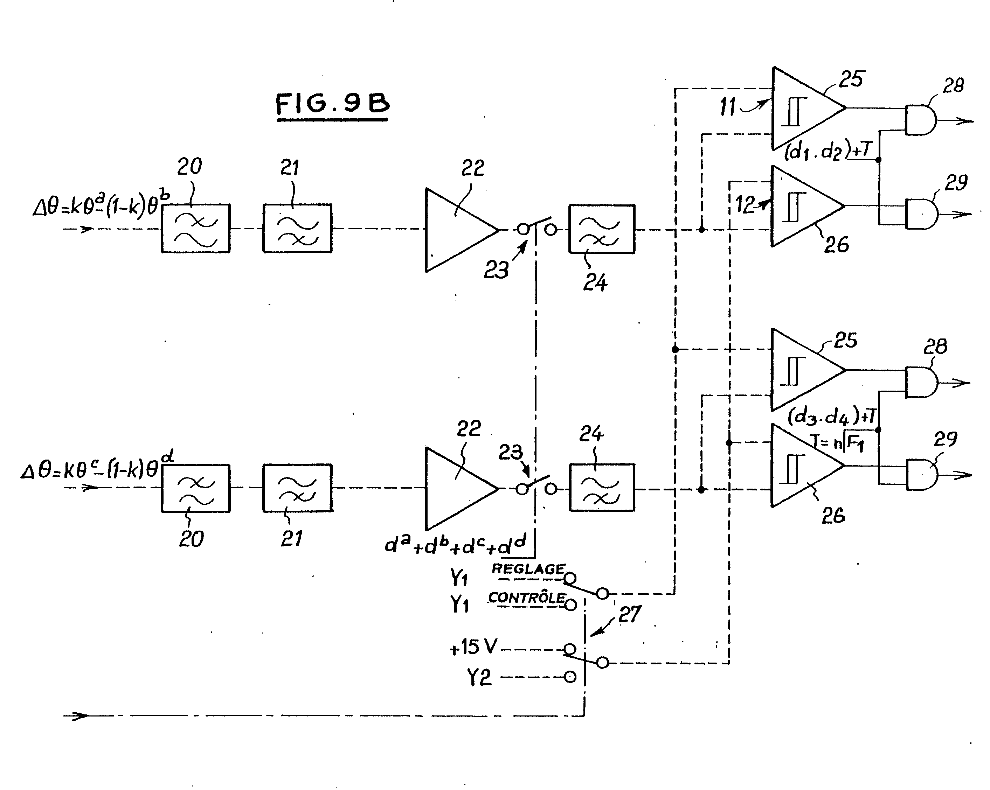

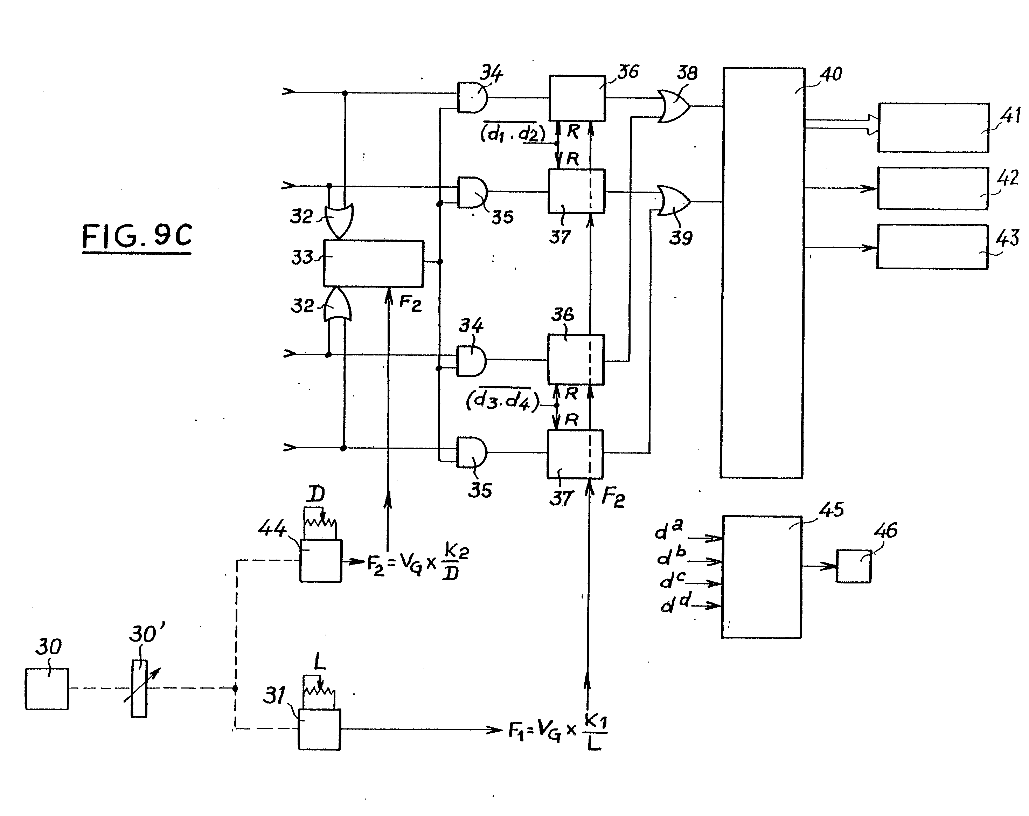

Pour mieux évaluer l'importance des défauts du produit contrôlé, on peut utiliser plusieurs couples de sondes $1^a$-$1^b$ juxtaposés le long de l'axe de défilement du produit de part et d'autre du plan transversal de la Fig. 6 ; tous ces couples peuvent être incorporés à une même réglette 10 et protégés par une pièce 12 commune. On décrira ci-dessous en regard des Fig. 9A à 9C l'appareillage électronique de détection associé à deux couples de sondes $1^a$-$1^b$ et $1^c$-$1^d$. Sur ces Fig. 9A à 9C, on a représenté en traits mixtes les liaisons mécaniques, en pointillé les liaisons analogiques et en traits pleins les liaisons logiques.

L'ensemble du circuit électronique peut être connecté par quatre commutateurs 13 soit aux quatre sondes $1^a$ à $1^d$, soit à quatre autres sondes analogues $1'^a$ à $1'^d$ disposées de la même façon mais en un emplacement extérieur à la dresseuse. Ces quatre autres sondes servent à réaliser l'étalonnage du circuit par balayage d'un tronçon de barre entraîné en rotation mais fixe en translation et possédant un défaut bien défini.

Un oscillateur 14 alimente par l'intermédiaire d'amplificateurs de puissance 15 l'un ou l'autre des deux groupes de quatre sondes. Dans une application réelle, on a réglé la fréquence de l'oscillateur 14 sur 100 kHz, ce qui conduit à des variations pratiquement purement angulaires du vecteur V.

Les tensions V recueillies aux bornes de chaque sonde, après avoir été préamplifiées par un module de préamplification incorporé à chaque sonde, sont envoyées vers l'armoire de traitement contenant le circuit électronique.

La chaîne de traitement de chaque sonde comprend tout d'abord, en aval du commutateur 13 correspondant :

— un récepteur 16 qui a pour rôle principal de compenser rigoureusement la tension résiduelle de la sonde ; et

— un phasemètre-redresseur 17 qui extrait les coordonnées polaires du signal provenant du récepteur 16, à savoir le module r et l'argument θ. Cet argument est fourni par rapport au vecteur tension inductrice de référence θ correspondant au fonctionnement de l'oscillateur 14.

En l'absence de produit, si $r \neq 0$, on synthétise au moyen de l'oscillateur 14 un vecteur de composantes (R, J) qui annule le vecteur analysé par le phasemètre-redresseur 17. Ensuite, en cours de contrôle d'une bare, le module r est fourni à un circuit de détermination de position 18 commun aux quatres sondes.

Les arguments θ correspondant à deux sondes d'un même couple, par exemple $1^a$ et $1^b$, sont combinés dans un circuit de calcul 19 dont la sortie, qui correspond à $\Delta \theta = K \theta^a - (1 - K) \theta^b$, est filtrée par des filtres passe-bas 20 et passe-haut 21 à pente raide, de manière à ne conserver qu'une bande passante déterminée correspondant aux signaux de défauts recherchés. Les signaux sont ensuite amplifiés par un amplificateur 22 et parviennent à un interrupteur 23.

Le circuit 18 compare les modules r à des valeurs correspondant à deux distances prédéterminées minimale $d^m$ et maximale $d_M$ et sort quatre informations logiques $d^a$ à $d^d$. Si la distance du produit 2 à la sonde concernée est supérieure à $d_M$, on considère que ce produit est absent ; si elle est inférieure à $d_m$, ceci correspond à une usure excessive de la pièce de protection 12. Les passages de l'une des informations $d^a$ à $d^d$ de 0 à 1 correspond à une distance produit — sonde comprise entre $d_m$ et $d_M$, c'est-à-dire à la présence d'une barre devant la sonde et à une bonne protection de celle-ci, et ferme l'interrupteur 23, ce qui évite de traiter plus avant les signaux erratiques apparaissant en l'absence de barre. On supposera dans la suite que l'interrupteur 23 est fermé.

Après filtrage dans un filtre passe-haut 24, le signal aborde la partie logique du circuit électronique en arrivant à deux comparateurs 25, 26 où il est comparé respectivement à deux seuils. En position « étalonnage », le comparateur 25 reçoit un seuil Y1 et le comparateur 26 un seuil de + 15 Volts très supérieur aux signaux pouvant être reçus, de sorte que seul le premier comparateur fournit des signaux de sortie. En position « contrôle », les deux comparateurs reçoivent des seuils Y1 et Y2 correspondant à deux degrés de sévérité du contrôle. Les quatre seuils précités sont obtenus au moyen d'un double commutateur 27 couplé aux commutateurs 13.

La sortie de chaque comparateur 25, 26, appliquée à une entrée de deux portes ET 28, 29 respectivement, fournit ainsi des signaux logiques représentatifs de phénomènes perturbateurs d'amplitude au moins égale à une valeur prédéterminée. La suite du circuit sert à détecter s'il s'agit ou non de défauts du produit. En effet, un signal de sortie des comparateurs 25, 26 peut être engendré non seulement par un défaut métallurgique du type recherché, mais également par l'influence des extrémités du produit à contrôler sur les sondes ou par un phénomène perturbateur d'origine électrique ou mécanique.

On s'intéressera tout d'abord aux extrémités de la barre. On a vu que l'extrémité avant de la barre devant une sonde fait passer le signal d correspondant de 0 à 1. Cette information logique est appliquée à la deuxième entrée des portes ET 28, 29 après une temporisation T qui est fonction de la longueur L exclue du traitement à chaque extrémité de la barre. Plus précisément, cette temporisation correspond au défilement d'une longueur L de barre prédéterminée.

Dans le cas d'une dresseuse à deux galets, on mesure avec une dynamo tachymétrique 30 associée à un potentiomètre d'ajustage 30' la vitesse du galet cylindrique 8. Cette tension, après pondération, est envoyée dans un convertisseur tension/fréquence 31 qui détermine la temporisation T, égale à un multiple de $1/F_1$ avec $F_1 = V_G \cdot K_1/L$ où $V_G$ est la tension ajustée de la dynamo tachymétrique et $K_1 \cdot V_G$ la vitesse linéaire du produit 2. Ainsi : $T = nL/V_G \cdot K_1$.

Ceci supprime les signaux non significatifs de début de contrôle correspondant à la longueur L en tête de barre. Les signaux restants sont envoyés d'une part, par une porte OU 32, à un circuit de corrélation 33, d'autre part à une entrée de deux autres portes ET 34, 35 commandées par le circuit 33. L'autre entrée de ces portes ET reçoit la sortie des portes ET 28, 29 respectivement, et leurs sorties parviennent respectivement à deux registres à décalage 36, 37. Ces registres ont une fréquence propre égale à la valeur $F_1$ indiquée plus haut et un temps de passage égal au temps T précité.

Lorsque l'extrémité arrière de la barre franchit le couple de sondes $1^a$-$1^b$, les signaux $d^a$ et $d^b$ reviennent à zéro. Ceci provoque la remise à zéro des registres 36 et 37. Ainsi, les signaux entrant dans ces registres mais correspondant à la partie arrière de longueur L de la barre ne sortent pas des registres 36 et 37.

Les signaux sortant des registres 36 et 37 sont combinés, à travers une porte OU 38, 39 respectivement, avec les signaux correspondants relatifs aux deux autres sondes $1^c$ et $1^d$, et parviennent à un dispositif 40 de comptage, mémorisation et commande de marquage. Diverses décisions peuvent alors être prises quant au sort des barres contrôlées, suivant le nombre de défauts supérieurs aux deux seuils, ce grâce à des compteurs 41, à une commande de tri 42 et à une commande de marquage des barres 43 reliées au dispositif 40. Le dispositif 40 permet également d'évaluer les dimensions des défauts détectés.

Le circuit de corrélation 33 est destiné à éliminer les signaux parasites d'origine électrique ou mécanique. Pour cela, ce circuit mémorise chaque signal reçu, puis à l'apparition d'un second signal, il vérifie que celui-ci correspond au même endroit sur la barre, ou à un autre endroit situé sur la même génératrice. Dans l'affirmative, et seulement dans ce cas, le signal est validé et traité comme correspondant à un défaut.

Pour cela, le circuit 33, qui est commun aux deux couples de sondes $1^a$-$1^b$ et $1^c$-$1^d$, comprend un registre à décalage piloté par une fréquence propre proportionnelle à la vitesse de rotation de la barre. Dans le cas d'une dresseuse à deux galets, cette fréquence est $F_2 = V_G \times K_2/D$,

où D est le diamètre de la barre contrôlée, et est fournie par un convertisseur tension/fréquence 44 relié à la dynamo 30. Il est à noter que le facteur $K_2$ incorpore l'inclinaison des galets, qui détermine le pas de l'hélice d'avance de la barre.

Le temps de passage du registre à décalage précité est égal au temps de rotation de la barre 2. Ainsi, si un signal correspond à un défaut, il est appliqué à la deuxième entrée des portes ET 34 et 35 en même temps que le second signal parvient à la première entrée de ces portes. Celles-ci s'ouvrent donc en délivrant un signal logique dans la suite du circuit.

Il est encore prévu un dispositif 45 de surveillance des sondes qui vérifie le passage à peu près simultané de 0 à 1 et de 1 à 0 des signaux $d^a$ à $d^d$. Ce dispositif est relié à des dispositifs de sécurité et d'alarme appropriés 46.

Le dispositif électrique des Fig. 9A à 9C comporte un certain nombre de points-tests appropriés permettant de mesurer les signaux en ces points. Ces points-tests n'ont pas été représentés, dans un but de clarté.

En variante, la forme de chaque sonde peut différer d'un H. En particulier, la sonde peut comporter une branche supplémentaire perpendiculaire au produit 2, la branche médiane portant les deux enroulements 6 et 7.

Bien entendu, l'invention s'applique au contrôle de produits métalliques autres que des barres rondes tels que des barres ayant une autre forme en section ou des feuillards. De plus, en variante, le produit contrôlé peut être fixe et la ou les sondes mobiles de façon à balayer toute la surface du produit. En particulier, la sonde peut être montée sur un support rotatif pour contrôler une barre ronde se déplaçant en translation le long de l'axe de rotation de ce support.

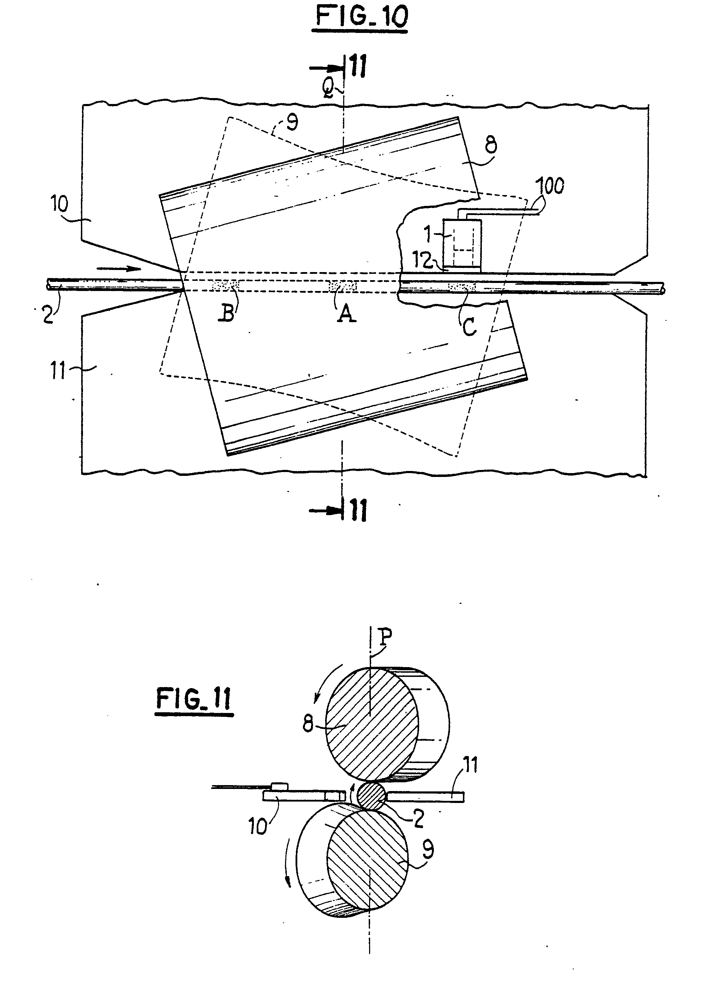

Dans la description ci-dessous du mode de réalisation des Fig. 10 et 11, on utilisera les mêmes numéros de référence que précédemment pour désigner les éléments correspondants.

Comme dans le premier mode de réalisation, la dresseuse comprend un galet cylindrique supérieur 8 et un galet hyperbolique inférieur 9 tournant dans le même sens et dont les axes respectifs X-X et Y-Y sont horizontaux et obliques, orientés en sens opposés, et coupent le plan vertical de symétrie P de la machine dans un même plan vertical transversal Q, qui est le plan de la Fig. 11.

La machine comporte de plus deux réglettes horizontales fixes de guidage 10 et 11. En service, la réglette 10 qui fait face au sens de rotation du galet hyperbolique 9 n'est attaquée que par les extrémités du produit 2 à contrôler, qui est une barre ronde animée d'un mouvement de défilement horizontal suivant les flèches portées sur les Fig. 10 et 11, alors que la partie courante de celui-ci ne vient en contact qu'avec la réglette 11 opposée. La sonde 1 est noyée dans la réglette 10 et est protégée par une pièce interchangeable 12. La sonde 1 est reliée par des fils électriques 100 au circuit électronique décrit plus haut.

La seule différence entre le dispositif représenté aux Fig. 10 et 11 et celui décrit précédemment réside dans la disposition de la sonde 1.

En effet, dans le premier mode de réalisation, bien qu'il soit envisagé de disposer la sonde dans les limites des galets 8 et 9, on considérait comme seul facteur à prendre en compte pour l'implantation de la sonde la vibration du produit 2, de sorte que l'implantation préférée était le plan Q ou le voisinage de ce plan, suivant l'enseignement du brevet FR 2 218 146 précité.

Or, de façon surprenante, les essais ont montré que le plan Q n'était pas du tout l'emplacement le plus favorable pour la détection des défauts suivant le procédé décrit en regard des Fig. 1 à 9C, car lorsque la sonde se trouve dans ce plan ou dans son voisinage, on obtient un fort bruit de fond, qui peut atteindre un niveau suffisant pour empêcher la discrimination des signaux engendrés par les défauts métallurgiques recherchés.

Les essais ont montré que, par contre, le bruit de fond descend à un niveau tout à fait acceptable lorsque la sonde 1 se trouve en aval du point C où la barre 2 quitte le galet hyperbolique 9, du côté de sortie de la machine, la position optimale étant en regard de ce point C. Dans le cas d'utilisation de plusieurs sondes décalées longitudinalement, la disposition optimale consiste à installer la première sonde, ou sonde amont, en regard du point C.

La Demanderesse pense que ce résultat peut s'expliquer de la façon suivante.

On sait que, dans une dresseuse à deux galets, la barre subit lors de l'opération de dressage une flexion entre le galet cylindrique et le galet hyperbolique en prenant appui sur le galet cylindrique 8 en un point A situé à peu près dans le plan médian Q et sur le galet hyperbolique 9 en deux points B et C proches des extrémités de ce galet. Bien entendu, les points A, B et C ne sont définis qu'approximativement, et c'est pourquoi ils ont été représentés par des zones ombrées à la Fig. 1. Le point C est le point défini plus haut.

Les contraintes engendrées par cette flexion entre les points B et C sont maximales au point A et viennent s'ajouter aux contraintes de compression engendrées par le serrage des galets et aux tensions mécaniques internes engendrées par l'usinage (étirage, écroutage et dressage). Les contraintes résultantes varient du fait du déplacement de la barre et engendrent des signaux qui s'ajoutent à ceux engendrés par la structure, les vibrations mécaniques et les éventuels défauts. Le bruit de fond s'en trouve augmenté de façon irrégulière mais d'autant plus importante que les contraintes sont plus élevées.

Ainsi, le point C est le point dépourvu de contraintes de flexion et de compression où la vibration du produit 2 est minimale.

**Revendications**

1. Dispositif de détection par courants de Foucault de défauts dans un produit métallique défilant devant au moins une sonde (1a à 1d), ce dispositif étant destiné à être intégré dans une dresseuse à deux galets dont l'un est un galet hyperbolique (9), ladite au moins une sonde comprenant deux enroulements (7, 6) en série disposés à des distances différentes du produit (2), un enroulement inducteur (5) disposé de façon à engendrer dans les deux enroulements des champs magnétiques opposés, des moyens de captage de la tension (V) aux bornes de ces deux enroulements et un circuit électronique (16 à 40) de détection de la variation de l'argument (θ) du vecteur représentatif de cette tension par rapport au vecteur tension inductrice (φ), caractérisé en ce que la sonde (1a à 1d) est noyée dans une réglette de guidage (10) de ladite dresseuse, cette réglette faisant face au sens de rotation du galet hyperbolique (9) et est protégée par une pièce interchangeable (12).

2. Dispositif selon la revendication 1, caractérisé en ce qu'il comprend un jeu de sondes d'étalonnage (1'a à 1'd) disposé à l'extérieur de la dresseuse, un jeu analogue de sondes de contrôle (1a à 1d) disposé dans la dresseuse, et des moyens (13) pour relier sélectivement à l'un ou l'autre de ces jeux de sondes, le circuit électronique (16, 40).

3. Dispositif selon l'une quelconque des revendications 1 ou 2, caractérisé en ce que le circuit électronique (16 à 40) comprend une première partie d'analyse de signaux du type analogique (16 à 24) conduisant à un comparateur à seuil (25, 26) puis une deuxième partie de type logique (25 à 40).

4. Dispositif selon la revendication 3, destiné à être intégré à une machine dans laquelle la sonde et le produit décrivent une rotation relative, notamment à une dresseuse à deux galets, caractérisé en ce que la partie logique (25 à 40) du circuit électronique (16 à 40) comporte un circuit de corrélation (33) afin de ne conserver que les signaux apparaissant deux fois lors de deux passages successifs d'une même génératrice du produit (2) devant la sonde (1a, 1b).

5. Dispositif selon la revendication 4, caractérisé en ce que le circuit de corrélation (33) comprend un registre à décalage dont le temps de traversée est égal au temps de rotation du produit (2).

6. Dispositif selon l'une quelconque des revendications 3 à 5, caractérisé en ce que la partie logique (25 à 40) du circuit électronique (16 à 40) comprend des moyens (36, 37) pour éliminer les signaux correspondant à des longueurs prédéterminées (L) en tête et en queue du produit (2).

7. Dispositif selon la revendication 6, caractérisé en ce que les moyens d'élimination de tête de produit comprennent une temporisation (T) égale au temps de défilement de la longueur de tête prédéterminée (L).

8. Dispositif selon l'une des revendications 6 et 7, caractérisé en ce que les moyens d'élimination de queue de produit comprennent un registre à décalage final (36, 37) dont le temps de passage est égal au temps de défilement de la longueur de queue prédéterminée (L), des moyens (1a à 1d, 18) pour détecter le passage de la queue de barre devant la sonde, et des moyens pour ramener à zéro le registre à décalage final (36, 37) sous la commande de ces moyens (1a à 1d, 18).

9. Dispositif suivant l'une quelconque des revendications 1 à 8, caractérisé en ce que la sonde (1) ou la première sonde dans le sens de défilement du produit (2), est disposée en aval ou dans la région du point (C) où le produit quitte le galet hyperbolique (9).

## Claims

1. A device for detecting by eddy currents defects in a metal product travelling in front of at least one sensor (1a to 1d), this device being adapted to be integrated in a straightening machine having two rollers, one of which is a hyperbolic roller (9), said at least one sensor comprising two windings (7, 6) in series disposed at different distances from the product (2), a field winding (5) disposed in such manner as to produce in the two windings opposed magnetic fields, means for detecting the voltage (V) at the terminals of these two windings, and an electronic circuit (16 to 40) for detecting the variation of the argument ($\theta$) of the vector representing this voltage relative to the field voltage vector ($\phi$), characterised in that the sensor (1a to 1d) is embedded in a guide bar (10) of said straightening machine, this bar being in confronting relation to the direction of rotation of the hyperbolic roller (9) and is protected by an interchangeable member (12).

2. A device according to claim 1, characterised in that it comprises a set of calibration sensors (1'a to 1'd) disposed outside the straightening machine, a similar set of inspection sensors (1a to 1d) disposed within the straightening machine, and means (10) for selectively connecting the electronic circuit (16, 40) to either of these sets of sensors.

3. A device according to any one of the claims 1 or 2, characterised in that the electronic circuit (16 to 40) comprises a first signal analyzing part of analog type (16 to 24) leading to a second part (25 to 40) of logic type.

4. A device according to claim 3, adapted to be integrated in a machine in which the sensor and the product undergo a relative rotation and in particular a straightening machine having two rollers, characterised in that the logic part (25 to 40) of the electronic circuit (16 to 40) comprises a correlation circuit (33) so as to conserve only the signals appearing twice upon two successive passages of the same generatrix of the product (2) in front of the sensor (1a, 1b).

5. A device according to claim 4, characterised in that the correlation circuit (33) comprises a shifting register whose traversing time is equal to the time of rotation of the product (2).

6. A device according to any one of the claims 3 to 5, characterised in that the logic part (25 to 40) of the electronic circuit (16 to 40) comprises means (36, 37) for eliminating the signals corresponding to predetermined lengths L at the head and tail ends of the product (2).

7. A device according to claim 6, characterised in that the eliminating means at the head of the product comprise a time delay (T) equal to the time of travel of the predetermined length (L) of the head end.

8. A device according to one of the claims 6 and 7, characterised in that the eliminating means of the tail end of the product comprise a final shifting register (36, 37) whose passage time is equal to the time of travel of the predetermined length (L) of the tail end, means (1a to 1d, 18) for detecting the passage of the tail end of the bar in front of the sensor, and means for resetting to zero the final shifting register (36, 37) under the control of these means (1a to 1d, 18).

9. A device according to any one of the claims 1 to 8, characterised in that the sensor (1), or the first sensor in the direction of travel of the product (2), is disposed downstream of, or in the region of, the point (C) where the product leaves the hyperbolic roller (9).

## Patentansprüche

1. Vorrichtung zur Erfassung von Fehlern in einem an mindestens einer Sonde (1a-1d) vorbeilaufenden Prüfstück aus Metall mittels Wirbelströmen, welche in einer Richtmaschine mit zwei Rollen einbaubar ist, wovon mindestens eine Rolle (9) hyperbolisch ist, wobei die Sonde zwei in Reihe geschaltete, in unterschiedlichen Abständen zum Prüfstück angeordnete Spulen (7, 6) aufweist, sowie eine Induktionsspule (5), die derart angeordnet ist, daß sie in den beiden Spulen entgegengesetzte magnetische Felder erzeugt, Mittel zur Erfassung der Spannung (V) an den Klemmen der beiden Spulen und eine elektronische Schaltung (16-40) zur Erfassung der Veränderung der diese Spannung darstellenden Vektorengröße ($\theta$) im Vergleich zu dem die induktive Spannung darstellenden Vektor ($\phi$), dadurch gekennzeichnet, daß die Sonde (1a-1d) in einer Führungsleiste (10) der Richtmaschine versenkt angeordnet ist, wobei die Leiste sich entgegen der Umlaufrichtung der hyperbolischen Rolle (9) erstreckt und durch ein auswechselbares Teil (12) geschützt ist.

2. Vorrichtung nach Anspruch 1, gekennzeichnet durch eine Gruppe von Eichsonden (1'a-1'd), die außerhalb der Richtmaschine angeordnet sind, durch eine entsprechende Gruppe Prüfsonden (1a-1d) innerhalb der Richtmaschine und durch Mittel (13) zur wahlweisen Verbindung der elektronischen Schaltung (16, 40) mit einer dieser Sondengruppen.

3. Vorrichtung nach einem der vorhergehenden Ansprüche, dadurch gekennzeichnet, daß die elektronische Schaltung (16-40) einen ersten Analog-Teil zur Auswertung von Signalen aufweist, der mit einem Schwellenwertvergleicher (25, 26) verbunden ist, und einen zweiten logischen Teil (25-40).

4. Vorrichtung nach Anspruch 3, zum Einbau in einer Maschine, in welcher die Sonde und das Prüfstück eine relative Drehung zueinander beschreiben, insbesondere in einer Richtmaschine mit zwei Rollen, dadurch gekennzeichnet, daß der logische Teil (25-40) der elektronischen Schaltung (16-40) einen Korrelationskreis (33) aufweist, um nur die bei zwei aufeinanderfolgenden Durchläufen derselben Erzeugenden des Prüfstückes (2) an der Sonde (1a, 1b) zweimal erscheinenden Signale zu speichern.

5. Vorrichtung nach Anspruch 4, dadurch gekennzeichnet, daß der Korrelationskreis (33) ein Schieberegister aufweist, dessen Durchgangszeit gleich der Umlaufdauer des Prüfstückes (2) ist.

6. Vorrichtung nach einem der Ansprüche 3 bis 5, dadurch gekennzeichnet, daß der logische Teil (25-40) der elektronischen Schaltung (16-40) Mittel (36, 37) zur Ausscheidung von vorbestimmten Längen (L) am vorderen und hinteren Ende des Prüfstückes (2) entsprechenden Signalen aufweist.

7. Vorrichtung nach Anspruch 6, dadurch gekennzeichnet, daß die Mittel zur Ausscheidung der Signale für das vordere Ende des Prüfstückes eine Verzögerung (T) aufweisen, die gleich der Durchlaufdauer der vorbestimmten Länge (L) des vorderen Endes ist.

8. Vorrichtung nach einem der Ansprüche 6 und 7, dadurch gekennzeichnet, daß die Mittel zur Ausscheidung der Signale für das hintere Ende des Prüfstücks ein Endschieberegister aufweisen (36, 37), dessen Durchgangszeit gleich der Durchlaufdauer der vorbestimmten Länge (L) des hinteren Endes ist, sowie Mittel (11a-11d, 18) zur Erfassung des Durchlaufs des hinteren Endes der Stange an der Sonde und Mittel zur durch die Mittel (1a-1d, 18) gesteuerten Rückstellung des Endschieberegisters (36, 37) auf Null.·

9. Vorrichtung nach einem der vorhergehenden Ansprüche, dadurch gekennzeichnet, daß die Sonde (1) oder die erste in Durchlaufrichtung des Prüfstückes (2) vorgesehene Sonde hinter der oder im Bereich der Austrittsstelle (C) des Prüfstücks aus der hyperbolischen Rolle (9) angeordnet ist.

## FIG. 1

## FIG. 2

## FIG. 3

## FIG.4

## FIG. 5

## FIG.6

## FIG.7

## FIG.8A

$$I \quad \theta_a = f(t)$$

## FIG.8B

$$II \quad \theta_a = f(t)$$
$$-\theta_b = f(t)$$

## FIG.8C

$$III \quad \theta_a - \theta_b = f(t)$$

2

FIG. 9A

## FIG.9B

$\Delta\theta = k\theta^a - (1-k)\theta^b$

$\Delta\theta = k\theta^c - (1-k)\theta^d$

$d^a + d^b + d^c + d^d$

$(d_1 . d_2) + T$

$(d_3 . d_4) + T$

$T = n\sqrt{F_1}$

REGLAGE

CONTRÔLE

+15 V

Y2

Y1

Y1

0 052 058

FIG. 9C

$(\overline{d_1 . d_2})$

$(\overline{d_3 . d_4})$

$F_2 = V_G \times \dfrac{K_2}{D}$

$F_1 = V_G \times \dfrac{K_1}{L}$

0 052 058

## FIG. 10

## FIG. 11